(19) Europäisches Patentamt
European Patent Office
Office européen des brevets

(11) EP 2 586 825 B1

(12) **EUROPEAN PATENT SPECIFICATION**

(45) Date of publication and mention
of the grant of the patent:
**28.05.2014 Bulletin 2014/22**

(51) Int Cl.:
**C08L 23/14** (2006.01)    **C08F 210/06** (2006.01)
**C08L 23/08** (2006.01)    **C08L 83/04** (2006.01)

(21) Application number: **11187032.5**

(22) Date of filing: **28.10.2011**

(54) **High flow soft polypropylene composition**

Weiche Polypropylenzusammensetzung mit hohem Durchfluss

Composition de polypropylène mou à flux élevé

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.05.2013 Bulletin 2013/18**

(73) Proprietor: **Borealis AG**
**1220 Vienna (AT)**

(72) Inventors:
• **KULSHRESHTHA, Bhawna**
**4020 Linz (AT)**
• **HRISTOV, Velichko**
**4040 Linz (AT)**

• **MONNISSEN, Luc**
**5060 Arsimont (BE)**

(74) Representative: **Lux, Berthold**
**Maiwald Patentanwalts GmbH**
**Elisenhof**
**Elisenstraße 3**
**80335 München (DE)**

(56) References cited:
**EP-A1- 1 236 769      EP-A1- 1 935 938**
**EP-A1- 1 939 246      EP-A1- 2 036 947**
**EP-A1- 2 083 046      WO-A1-2004/000899**
**US-A1- 2010 286 310**

## Description

The present invention is directed to a new soft polypropylene composition with high flow and articles made therefrom.

Polymers are increasingly used in different demanding applications. At the same time there is a continuous seek for tailored compositions which meet the requirements of these applications. The demands can be challenging, since many polymer properties are directly or indirectly interrelated. For instance in the field of packaging soft materials having high scratch resistance are required.

Heterophasic systems are known for its good impact behavior. Heterophasic propylene copolymers are well known in the art. Such heterophasic propylene copolymers comprise a matrix being either a propylene homopolymer or a random propylene copolymer in which an elastomeric copolymer is dispersed. Thus the polypropylene matrix contains (finely) dispersed inclusions being not part of the matrix and said inclusions contain the elastomeric copolymer. The term inclusion indicates that the matrix and the inclusion form different phases within the heterophasic propylene copolymer, said inclusions are for instance visible by high resolution microscopy, like electron microscopy or scanning force microscopy.

Accordingly it is the object of the present invention to provide a soft polymer composition with increased scratch resistance and good processability.

The finding of the present invention is to provide composition with high melt flow, said composition comprises a heterophasic propylene copolymer, a plastomer and a polysiloxane, said heterophasic propylene copolymer comprises as the matrix a random propylene copolymer in which an elastomeric propylene copolymer is dispersed, the heterophasic propylene copolymer is further featured by rather high overall comonomer content and a rather high comonomer content in the xylene cold soluble (XCS) fraction.

Accordingly the present invention is directed to a polypropylene composition having a melt flow rate $MFR_2$ (230 °C) measured according to ISO 1133 of at least 30 g/10min, said composition comprises

(a) a heterophasic propylene copolymer (RAHECO) comprising

(a1) a random propylene copolymer (R-PP), and
(a2) an elastomeric propylene copolymer (E),

said heterophasic propylene copolymer (RAHECO) has a total comonomer content of at least 5.0 wt.-% and a comonomer content in the xylene cold soluble (XCS) fraction of at least 20.0 wt.-%,
(b) a plastomer (P) being different to the elastomeric propylene copolymer (E),
(c) a polysiloxane (PS),
(d) optionally an antiblocking agent (AB), and
(e) optionally a slip agent (SA).

Preferably the instant polypropylene composition comprises

(a) at least 50.0 wt.-%, more preferably at least 70.0 wt.-%, still more preferably 50.0 to 95.0 wt.-%, yet more preferably 70.0 to 90.0 wt.-%, of the heterophasic propylene copolymer (RAHECO) comprising
(b) at least 3.0 wt.-%, more preferably 5.0 to 20.0 wt.-%, still more preferably 8.0 to 15.0 wt.-%, of the plastomer (P),
(c) at least 0.5 wt.-%, more preferably 0.5 to 5.0 wt.-%, yet more preferably 1.0 to 3.0 wt.-% of the polysiloxane (PS),
(d) at least 0.05 wt.-%, more preferably 0.05 to 2.0 wt.-%, yet more preferably 0.1 to 0.5 wt.-% of the antiblocking agent (AB), and
(d) optionally at least 0.05 wt.-%, more preferably 0.05 to 2.5 wt.-%, yet more preferably 0.1 to 1.5 wt.-% of the slip agent (SA)

based on the total polypropylene composition, preferably based on the total amount of polymers present in the polypropylene composition and optionally the antiblocking agent (AB) and the antiblocking agent (AB), more preferably based on the total amount of the heterophasic propylene copolymer (HECO), the plastomer (P), the polysiloxane (PS), and optionally the antiblocking agent (AB) and/or the slip agent (SA).

It has surprisingly been found that such polypropylene composition is very soft, has good scratch resistance and high flowability.

In the following the invention is defined in more detail.

As indicated above the instant polypropylene composition is featured by a rather high meltflow rate. Accordingly it is preferred that the instant polypropylene composition has a melt flow rate $MFR_2$ (230 °C) measured according to ISO 1133 of at least 30 g/10min, more preferably in the range of 30 to 200 g/10min, still more preferably in the range of 40 to 100 g/10min, yet more preferably in the range of 45 to 90 g/10min, still yet more preferably in the range of 50 to 80 g/10min.

A further characteristic of the polypropylene composition is its softness. Accordingly it is preferred that the polypropylene composition has a flexural modulus measured on injection molded specimens of 80 x 10 x 4 mm$^3$ according to ISO 178 of not more than 600 MPa, more preferably of below 550 MPa, still more preferably of equal or below 500 MPa, yet more preferably in the range of 200 to below 550 MPa, still yet more preferably in the range of 250 to 500 MPa.

According to one embodiment the polypropylene composition of the present invention has a scratch visibility $\Delta L$ of less than 0.70, preferably less than 0.50, more preferably less than 0.1, still more preferably less than and most preferably less than 0.09, wherein the scratch visibility $\Delta L$ is measured according to the method described in the examples section below with a load of 5 N on a grained surface (grain K09 from Eschmann Textures).

In the following the individual components are defined in more detail.

**Heterophasic propylene copolymer**

One essential component of the instant polypropylene composition is the heterophasic propylene copolymer (RAHECO). The heterophasic propylene copolymer (RAHECO) according to this invention comprises a matrix (M) being a random propylene copolymer (R-PP) and dispersed therein an elastomeric propylene copolymer (E). Thus the matrix (M) contains (finely) dispersed inclusions being not part of the matrix (M) and said inclusions contain the elastomeric propylene copolymer (E). The term inclusion indicates that the matrix (M) and the inclusion form different phases within the heterophasic propylene copolymer (RAHECO), said inclusions are for instance visible by high resolution microscopy, like electron microscopy or scanning force microscopy.

Preferably the heterophasic propylene copolymer (RAHECO) according to this invention comprises as polymer components only the random propylene copolymer (R-PP) and the elastomeric propylene copolymer (E). In other words the heterophasic propylene copolymer (RAHECO) may contain further additives but no other polymer in an amount exceeding 5 wt.-%, more preferably exceeding 3 wt.-%, like exceeding 1 wt.-%, based on the total heterophasic propylene copolymer (RAHECO). One additional polymer which may be present in such low amounts is a polyethylene which is a by-reaction product obtained by the preparation of heterophasic propylene copolymer (RAHECO) (see in detail below). Accordingly it is in particular appreciated that the instant heterophasic propylene copolymer (RAHECO) contains only the random propylene copolymer (R-PP), the elastomeric propylene copolymer (E) and optionally polyethylene in amounts as mentioned in this paragraph.

Also the polypropylene composition of the present invention can be regarded as a heterophasic system. Accordingly the random propylene copolymer (R-PP) of the heterophasic propylene copolymer (RAHECO) constitutes also the matrix (M) of the overall polypropylene composition. The elastomeric propylene copolymer (E) and the plastomer (P) are (finely) dispersed in said matrix (M). Thereby the elastomeric propylene copolymer (E) and the plastomer (P) may form separate inclusions in the matrix (M), i.e. in the random propylene copolymer (R-PP), or the plastomer (P) may form an inclusion within the inclusion of the elastomeric propylene copolymer (E).

The heterophasic propylene copolymer (RAHECO) according to this invention is featured by a rather high melt flow rate. Accordingly, the heterophasic propylene copolymer (RAHECO) has a melt flow rate $MFR_2$ (230 °C) of at least 7 g/10min, more preferably of at least 15 g/10min, still more preferably of at least 20 g/10min, yet more preferably of at least 35 g/10min, like of at least 50 g/10min, still yet more preferably of at least 60 g/10min or of at least 75 g/10min, like of at least 90 g/10min. Upper ranges are preferably not more than 160 g/10min, more preferably not more than 130 g/10min, still more preferably not more than 100 g/10min, yet more preferably not more than 90 g/10min, like not more than 70 g/10min. Thus preferred ranges are in the range of 7.0 to 200.0 g/10min, more preferably in the range of 20 to 160 g/10 min, still more preferably in the range of 35 to 130 g/10min, yet more preferably in the range of 50 to 100 g/10min, like 60 to 100 g/10min.

Preferably it is desired that the heterophasic propylene copolymer (RAHECO) is thermo mechanically stable. Accordingly it is appreciated that the heterophasic propylene copolymer (RAHECO) has a melting temperature of at least 130 °C, more preferably in the range of 130 to 150 °C, still more preferably in the range of 130 to 148 °C.

Typically the heterophasic propylene copolymer (RAHECO) has a rather low crystallization temperature, i.e. of not more than 110 °C, more preferably in the range of 85 to 110 °C, still more preferably in the range of 90 to 108 °C.

The heterophasic propylene copolymer (RAHECO) comprises apart from propylene also comonomers. Preferably the heterophasic propylene copolymer (RAHECO) comprises apart from propylene ethylene and/or $C_4$ to $C_{12}$ α-olefins. Accordingly the term "propylene copolymer" according to this invention is understood as a polypropylene comprising, preferably consisting of, units derivable from

(a) propylene
and

(b) ethylene and/or $C_4$ to $C_{12}$ $\alpha$-olefins.

Thus the propylene copolymers according to this invention, i.e. the heterophasic propylene copolymer (RAHECO), the random propylene copolymers (R-PP), the first propylene copolymer fraction (R-PP1), the second propylene copolymer fraction (R-PP2), and the elastomeric propylene copolymer (E), comprise monomers copolymerizable with propylene, for example comonomers such as ethylene and/or $C_4$ to $C_{12}$ $\alpha$-olefins, in particular ethylene and/or $C_4$ to $C_8$ $\alpha$-olefins, e.g. 1-butene and/or 1-hexene. Preferably the propylene copolymers according to this invention comprise, especially consist of, monomers copolymerizable with propylene from the group consisting of ethylene, 1-butene and 1-hexene. More specifically the propylene copolymers of this invention comprise - apart from propylene - units derivable from ethylene and/or 1-butene. In a preferred embodiment the propylene copolymers according to this invention comprise units derivable from ethylene and propylene only. Still more preferably the random propylene copolymer (R-PP) as well as the elastomeric propylene copolymer (E) contain the same comonomers, like ethylene.

Accordingly, the elastomeric propylene copolymer (E) is preferably an ethylene propylene rubber (EPR), whereas the random propylene copolymer (R-PP) is a random ethylene propylene copolymer (R-PP).

Additionally it is appreciated that the heterophasic propylene copolymer (RAHECO) preferably has a rather high total comonomer content which contributes to the softness of the material. Thus it is required that the comonomer content of the heterophasic propylene copolymer (RAHECO) is at least 5.0 wt.-%, preferably in the range of 6.0 to 15.0 wt.-%, more preferably in the range of 7.0 to 14.0 wt.-%, yet more preferably in the range of 7.5 to 13.5 wt.-%.

The xylene cold soluble (XCS) fraction measured according to according ISO 16152 (25 °C) of the heterophasic propylene copolymer (RAHECO) is at least 15 wt.-%, preferably in the range of 15 to 50 wt.-%, more preferably in the range of 18 to 40 wt.-%, still more preferably in the range of 20 to 40 wt.-%.

Further it is appreciated that the xylene cold soluble (XCS) fraction of the heterophasic propylene copolymer (RAHECO) is specified by its intrinsic viscosity. A low intrinsic viscosity (IV) values reflect a low weight average molecular weight. For the present invention it is required that the xylene cold soluble fraction (XCS) of the heterophasic propylene copolymer (RAHECO) has an intrinsic viscosity (IV) measured according to ISO 1628/1 (at 135 °C in decalin) of below 2.0 dl/g, more preferably of in the range of 0.8 to below 2.0 dl/g, still more preferably in the range of 1.0 to 1.9 dl/g, still yet more preferably like in the range of 1.0 to below 1.8 dl/g, like in the range of 1.0 to below 1.7 dl/g.

Additionally it is preferred that the comonomer content, i.e. ethylene content, of the xylene cold soluble (XCS) fraction of the heterophasic propylene copolymer (RAHECO) is not more than 35.0 wt.-%, more preferably in the range of 18.0 to 35.0 wt.-%, still more preferably in the range of 20.0 to 32.0 wt.-%, yet more preferably in the range of 20.0 to 30.0 wt.-%. The comonomers present in the xylene cold soluble (XCS) fraction are those defined above for the random propylene copolymer (R-PP) and the elastomeric propylene copolymer (E), respectively. In one preferred embodiment the comonomer is ethylene only.

The heterophasic propylene copolymer (RAHECO) can be further defined by its individual components, i.e. the random propylene copolymer (R-PP) and the elastomeric propylene copolymer (E).

The random propylene copolymer (R-PP) comprises monomers copolymerizable with propylene, for example comonomers such as ethylene and/or $C_4$ to $C_{12}$ $\alpha$-olefins, in particular ethylene and/or $C_4$ to $C_8$ $\alpha$-olefins, e.g. 1-butene and/or 1-hexene. Preferably the random propylene copolymer (R-PP) according to this invention comprises, especially consists of, monomers copolymerizable with propylene from the group consisting of ethylene, 1-butene and 1-hexene. More specifically the random propylene copolymer (R-PP) of this invention comprises - apart from propylene - units derivable from ethylene and/or 1-butene. In a preferred embodiment the random propylene copolymer (R-PP) comprises units derivable from ethylene and propylene only.

As mentioned above the heterophasic propylene copolymer (RAHECO) is featured by a rather high comonomer content. Accordingly the comonomer content of the random propylene copolymer (R-PP) is at least 2.0 wt.-%, more preferably in the range of 2.0 to 9.0 wt.-%, yet more preferably in the range of 2.5 to 8.0 wt.-%, still more preferably in the range of 3.0 to 7.0 wt.-%, like in the range of 3.5 to 6.0 wt.-%.

The term "random" indicates that the comonomers of the random propylene copolymer (R-PP), as well as of the first propylene copolymer fraction (R-PP1) and the second propylene copolymer fraction (R-PP2) are randomly distributed within the propylene copolymers. The term random is understood according to IUPAC (Glossary of basic terms in polymer science; IUPAC recommendations 1996).

The random propylene copolymer (R-PP) preferably comprises at least two polymer fractions, like two or three polymer fraction, all of them are propylene copolymers. Even more preferred the random propylene copolymer (R-PP) comprises, preferably consists of, a first propylene copolymer fraction (R-PP1) and a second propylene copolymer fraction (R-PP2). It is preferred that the first propylene copolymer fraction (R-PP1) is the comonomer lean fraction whereas the second propylene copolymer fraction (R-PP2) is the comonomer rich fraction.

In one preferred embodiment the first propylene copolymer faction (R-PP1) has a comonomer content in the range of 1.0 to 6.0 wt.-%, preferably in the range of 1.5 to 6.0 wt.- %, still more preferably in the range of 2.0 to 5.0, like in the range of 2.0 to 4.5 wt.-%.

The second propylene copolymer fraction (R-PP2) has preferably a comonomer content in the range of 3.0 to 12.0 wt.-%, more preferably in the range of 3.5 to 10.0 wt.-%, like in the range of 4.5 to 8.0 wt.-%.

It is additionally appreciated that the following inequation (I), preferably inequation (Ia), more preferably inequation (Ib), is fulfilled:

$$[R\text{-}PP] - [R\text{-}PP1] \geq 0.5 \qquad (I)$$

$$[R\text{-}PP] - [R\text{-}PP1] \geq 1.5 \qquad (Ia)$$

$$4.0 \geq [R\text{-}PP] - [R\text{-}PP1] \geq 2.0 \qquad (Ib)$$

wherein

[R-PP]     the comonomer content [wt.-%] of the random propylene copolymer (R-PP), and

[R-PP1]     the comonomer content [wt.-%] of the first propylene copolymer fraction (R-PP1),

Concerning the comonomers used for the first propylene copolymer fraction (R-PP1) and second propylene copolymer fraction (R-PP2) reference is made to the comonomers of the random propylene copolymer (R-PP). Preferably the first propylene copolymer fraction (R-PP1) and the second propylene copolymer fraction (R-PP2) contain the same comonomers, like ethylene.

A further component of the heterophasic propylene copolymer (RAHECO) is the elastomeric propylene copolymer (E) dispersed in the matrix (M). Concerning the comonomers used in the elastomeric propylene copolymer (E) it is referred to the information provided for the heterophasic propylene copolymer (RAHECO). Accordingly the elastomeric propylene copolymer (E) comprises monomers copolymerizable with propylene, for example comonomers such as ethylene and/or $C_4$ to $C_{12}$ $\alpha$-olefins, in particular ethylene and/or $C_4$ to $C_8$ $\alpha$-olefins, e.g. 1-butene and/or 1-hexene. Preferably the elastomeric propylene copolymer (E) comprises, especially consists of, monomers copolymerizable with propylene from the group consisting of ethylene, 1-butene and 1-hexene. More specifically the elastomeric propylene copolymer (E) comprises - apart from propylene - units derivable from ethylene and/or 1-butene. Thus in an especially preferred embodiment the elastomeric propylene copolymer (E) comprises units derivable from ethylene and propylene only.

The comonomer content of the elastomeric propylene copolymer (E) preferably is in the range of 20.0 to 40.0 wt.-%, more preferably in the range of 25.0 to 38.0 wt.-%, like in the range of 28.0 to 34.0 wt.-%.

Further, the weight ratio between the first propylene copolymer fraction (R-PP1) and second propylene copolymer fraction (R-PP2) preferably is 25:75 to 70:30, more preferably 30:70 to 60:40, still more preferably 33:67 to 55:45.

On the other hand the weight ratio between the random propylene copolymer (R-PP) and the elastomeric propylene copolymer (E) preferably is 95:5 to 70:30, more preferably 90:10 to 80:20.

As described in detail below the heterophasic propylene copolymer (RAHECO) is preferably obtained by visbreaking a heterophasic propylene copolymer (Pre-RAHECO). Accordingly in the following the heterophasic propylene copolymer (Pre-RAHECO) is described in more detail.

The heterophasic propylene copolymer (Pre-RAHECO) comprises a matrix (Pre-M) being a random propylene copolymer (Pre-R-PP) and an elastomeric propylene copolymer (Pre-E) dispersed in said matrix (Pre-M). Preferably the random propylene copolymer (Pre-R-PP) comprises at least two polymer fractions, like two or three polymer fraction, all of them are propylene copolymers. Even more preferred the random propylene copolymer (Pre-R-PP) comprises, preferably consists of, a first propylene copolymer fraction (Pre-R-PP1) and a second propylene copolymer fraction (Pre-R-PP2).

Visbreaking does not alter the amount or type of comonomer. Accordingly with regard to the amounts of comonomer in the heterophasic propylene copolymer (Pre-RAHECO) and its individual fractions it is referred to the heterophasic propylene copolymer (RAHECO) and its fractions, respectively. The same applies for the comonomer types used in these fractions.

Further the heterophasic propylene copolymer (Pre-RAHECO) preferably has a melt flow rate $MFR_2$ (230 °C) measured according to ISO 1133 in the range of 0.3 to 15.0 g/10min, more preferably in the range of 0.6 to 10.0 g/10min. The melt flow rate $MFR_2$ (230 °C) of the heterophasic propylene copolymer (Pre-RAHECO) is lower compared to the

melt flow rate MFR$_2$ (230 °C) of the (visbroken) heterophasic propylene copolymer (RAHECO). Accordingly the difference between the melt flow rate MFR$_2$ (230 °C) of the (visbroken) heterophasic propylene copolymer (RAHECO) and the heterophasic propylene copolymer (Pre-RAHECO) [MFR$_2$ (RAHECO) - MFR$_2$ (Pre-RAHECO)] is at least 2.5 g/10min, more preferably at least 5.0 g/10min, yet more preferably at least 20.0 g/10min, still more preferably in the range of 25.0 to 70.0 g/10min, like in the range of 30.0 to 60.0 g/10min.

The xylene cold soluble (XCS) fraction measured according to according ISO 16152 (25 °C) of the heterophasic propylene copolymer (Pre-RAHECO) is at least 15 wt.-%, preferably in the range of 15 to 50 wt.-%, more preferably in the range of 18 to 40 wt.-%, still more preferably in the range of 20 to 40.

The xylene cold soluble fraction (XCS) of the heterophasic propylene copolymer (Pre-RAHECO) preferably has an intrinsic viscosity (IV) measured according to ISO 1628/1 (at 135 °C in decaline) of below 3.0 dl/g, more preferably of in the range of 1.0 to below 2.5 dl/g, still more preferably in the range of 1.0 to 2.3 dl/g.

As indicated above the random propylene copolymer (Pre-R-PP) comprises at least two, more preferably comprises two, yet more preferably consists of two, propylene copolymer fractions (Pre-R-PP1) and (Pre-R-PP2), the two propylene copolymer fractions (Pre-R-PP1) and (Pre-R-PP2) differ from each other by the comonomer content. Accordingly it is preferred that the first propylene copolymer fraction (Pre-R-PP1) is the comonomer lean fraction whereas the second propylene copolymer fraction (Pre-R-PP2) is the comonomer rich fraction. Concerning the preferred comonomer content in each fraction it is referred to the information provided for the first propylene copolymer fraction (R-PP1) and the second propylene copolymer fraction (R-PP2), respectively. The same applies to the weight ratio between the first propylene copolymer fraction (Pre-R-PP1) and the second propylene copolymer fraction (Pre-R-PP2). Also with regard to this requirement it is referred to the first propylene copolymer fraction (R-PP1) and the second propylene copolymer fraction (R-PP2), respectively.

Further it is preferred that the first propylene copolymer fraction (Pre-R-PP1) and the second propylene copolymer fraction (Pre-R-PP2) have nearby the same melt flow rate. Accordingly it is preferred that difference between the melt flow rate of the random propylene copolymer (Pre-R-PP) and the first propylene copolymer fraction (R-PP1) [MFR(Pre-R-PP) - MFR(Pre-R-PP1)] is below +/- 1.5 g/10min, more preferably +/- 1.0 g/10min, yet more preferably +/- 0.5 g/10min. Thus in one embodiment the first propylene copolymer fraction (R-PP1) and the second propylene copolymer fraction (Pre-R-PP2) have a melt flow rate MFR$_2$ (230 °C) in the range of 0.5 to 18.0 g/10min, more preferably in the range of 2.0 to 15.0g/10min.

A further component of the heterophasic propylene copolymer (Pre-RAHECO) is the elastomeric propylene copolymer (Pre-E) dispersed in the matrix (Pre-M), i.e. in the random propylene copolymer (Pre-R-PP). Concerning the comonomers used in the elastomeric propylene copolymer (Pre-E) it is referred to the information provided for the heterophasic propylene copolymer (RAHECO) and especially for the in the elastomeric propylene copolymer (E). Accordingly any information provided regarding the comonomer content and comonomer type of the elastomeric propylene copolymer (E) can be used one-to-one for the elastomeric propylene copolymer (Pre-E).

Further, the weight ratio between the first propylene copolymer fraction (Pre-R-PP1) and second propylene copolymer fraction (Pre-R-PP2) preferably is 25:75 to 70:30, more preferably 30:70 to 60:40, still more preferably 33:67 to 55:45.

On the other hand the weight ratio between the random propylene copolymer (Pre-R-PP) and the elastomeric propylene copolymer (Pre-E) preferably preferably is 95:5 to 70:30, more preferably 90:10 to 80:20.

In one embodiment the heterophasic propylene copolymer (RAHECO) is obtained by sequential polymerization process as described below. In an alternative embodiment first the heterophasic propylene copolymer (Pre-RAHECO) is produced in sequential polymerization process and subsequently degraded (visbroken) in an extruder, preferably together with the additional components present in the instant polypropylene composition.

The heterophasic propylene copolymer (RAHECO) or the heterophasic propylene copolymer (Pre-RAHECO) can be produced in a sequential polymerization process. Accordingly the heterophasic propylene copolymer (RAHECO) or the heterophasic propylene copolymer (Pre-RAHECO) are preferably produced in a sequential polymerization process comprising at least two reactors, like three reactors. In case of the heterophasic propylene copolymer (Pre-RAHECO) it must be subsequently visbroken to reach the desired melt flow rate.

Preferably heterophasic propylene copolymer (RAHECO) or the heterophasic propylene copolymer (Pre-RAHECO) is obtained by a sequential polymerization process comprising the steps of

(a) polymerizing in a first reactor propylene and ethylene and/or C$_4$ to C$_{12}$ α-olefin obtaining thereby a first propylene copolymer fraction (PP 1) and a first propylene copolymer fraction (Pre-PP1), respectively,

(b) transferring said first propylene copolymer fraction (PP 1) and said first propylene copolymer fraction (Pre-PP1), respectively, in a second reactor,

(c) polymerizing in said second reactor in the presence of the first propylene copolymer fraction (PP1) and of the first propylene copolymer fraction (Pre-PP1), respectively, propylene and ethylene and/or C$_4$ to C$_{12}$ α-olefin obtaining a second propylene copolymer fraction (PP2) and a second propylene copolymer fraction (Pre-PP2), respectively, said first propylene copolymer fraction (PP 1) and said second propylene copolymer fraction (PP2) form the matrix (PP), or said first propylene copolymer fraction (Pre-PP1) and said second propylene copolymer fraction (Pre-PP2) form the matrix (Pre-PP),

(d) transferring said matrix (M) and said matrix (Pre-M), respectively, in a third reactor,

(e) polymerizing in said third reactor in the presence of the matrix (M) and of the matrix (Pre-M), respectively, propylene and ethylene and/or $C_4$ to $C_{12}$ α-olefin obtaining an elastomeric propylene copolymer (E) and an elastomeric propylene copolymer (Pre-E), respectively, said matrix (M) and said elastomeric propylene copolymer (E) form the heterophasic propylene copolymer (RAHECO), or said matrix (Pre-M) and said elastomeric propylene copolymer (Pre-E) form the heterophasic propylene copolymer (Pre-RAHECO).

For preferred embodiments of the heterophasic propylene copolymer (RAHECO), the heterophasic propylene copolymer (Pre- RAHECO), the random propylene copolymer (R-PP), the random propylene copolymer (Pre-R-PP), the first propylene copolymer fraction (PP1), the first propylene copolymer fraction (Pre-PP1), the second propylene copolymer fraction (R-PP2), the second propylene copolymer fraction (Pre-R-PP2), the elastomeric copolymer (E), and the elastomeric copolymer (Pre-E) reference is made to the definitions given above.

The term "sequential polymerization process" indicates that the heterophasic propylene copolymer (RAHECO) or the heterophasic propylene copolymer (Pre- RAHECO) is produced in at least two, like three, reactors connected in series. Accordingly the present process comprises at least a first reactor, a second reactor, and optionally a third reactor. The term "polymerization process" shall indicate that the main polymerization takes place. Thus in case the process consists of three polymerization reactors, this definition does not exclude the option that the overall process comprises for instance a pre-polymerization step in a pre-polymerization reactor. The term "consist of" is only a closing formulation in view of the main polymerization process.

The first reactor is preferably a slurry reactor and can be any continuous or simple stirred batch tank reactor or loop reactor operating in bulk or slurry. Bulk means a polymerization in a reaction medium that comprises of at least 60 % (w/w) monomer. According to the present invention the slurry reactor is preferably a (bulk) loop reactor.

The second reactor and the third reactor are preferably gas phase reactors. Such gas phase reactors can be any mechanically mixed or fluid bed reactors. Preferably the gas phase reactors comprise a mechanically agitated fluid bed reactor with gas velocities of at least 0.2 m/sec. Thus it is appreciated that the gas phase reactor is a fluidized bed type reactor preferably with a mechanical stirrer.

Thus in a preferred embodiment the first reactor is a slurry reactor, like loop reactor, whereas the second reactor and the third reactor (R3) are gas phase reactors (GPR). Accordingly for the instant process at least three, preferably three polymerization reactors, namely a slurry reactor, like loop reactor, a first gas phase reactor and a second gas phase reactor are connected in series are used. If needed prior to the slurry reactor a pre-polymerization reactor is placed.

A preferred multistage process is a "loop-gas phase"-process, such as developed by Borealis A/S, Denmark (known as BORSTAR® technology) described e.g. in patent literature, such as in EP 0 887 379, WO 92/12182 WO 2004/000899, WO 2004/111095, WO 99/24478, WO 99/24479 or in WO 00/68315.

A further suitable slurry-gas phase process is the Spheripol® process of Basell.

Preferably, in the instant process for producing the heterophasic propylene copolymer (RAHECO) or the heterophasic propylene copolymer (Pre-RAHECO) as defined above the conditions for the first reactor, i.e. the slurry reactor, like a loop reactor, may be as follows:

- the temperature is within the range of 50 °C to 110 °C, preferably between 60 °C and 100 °C, more preferably between 68 and 95 °C,
- the pressure is within the range of 20 bar to 80 bar, preferably between 40 bar to 70 bar,
- hydrogen can be added for controlling the molar mass in a manner known per se.

Subsequently, the reaction mixture of the first reactor is transferred to the second reactor, i.e. gas phase reactor, where the conditions are preferably as follows:

- the temperature is within the range of 50 °C to 130 °C, preferably between 60 °C and 100 °C,
- the pressure is within the range of 5 bar to 50 bar, preferably between 15 bar to 35 bar,
- hydrogen can be added for controlling the molar mass in a manner known per se.

The condition in the third reactor is similar to the second reactor.

The residence time can vary in the three reactor zones.

In one embodiment of the process for producing the heterophasic propylene copolymer (RAHECO) or the heterophasic propylene copolymer (Pre-RAHECO) the residence time in bulk reactor, e.g. loop is in the range 0.1 to 2.5 hours, e.g. 0.15 to 1.5 hours and the residence time in gas phase reactor will generally be 0.2 to 6.0 hours, like 0.5 to 4.0 hours.

If desired, the polymerization may be effected in a known manner under supercritical conditions in the first reactor, i.e. in the slurry reactor, like in the loop reactor, and/or as a condensed mode in the gas phase reactors.

Preferably the process comprises also a prepolymerization with the catalyst system, as described in detail below, comprising a Ziegler-Natta procatalyst, an external donor and optionally a cocatalyst.

In a preferred embodiment, the prepolymerization is conducted as bulk slurry polymerization in liquid propylene, i.e. the liquid phase mainly comprises propylene, with minor amount of other reactants and optionally inert components dissolved therein.

The prepolymerization reaction is typically conducted at a temperature of 10 to 60 °C, preferably from 15 to 50 °C, and more preferably from 20 to 45 °C.

The pressure in the prepolymerization reactor is not critical but must be sufficiently high to maintain the reaction mixture in liquid phase. Thus, the pressure may be from 20 to 100 bar, for example 30 to 70 bar.

The catalyst components are preferably all introduced to the prepolymerization step. However, where the solid catalyst component (i) and the cocatalyst (ii) can be fed separately it is possible that only a part of the cocatalyst is introduced into the prepolymerization stage and the remaining part into subsequent polymerization stages. Also in such cases it is necessary to introduce so much cocatalyst into the prepolymerization stage that a sufficient polymerization reaction is obtained therein.

It is possible to add other components also to the prepolymerization stage. Thus, hydrogen may be added into the prepolymerization stage to control the molecular weight of the prepolymer as is known in the art. Further, antistatic additive may be used to prevent the particles from adhering to each other or to the walls of the reactor.

The precise control of the prepolymerization conditions and reaction parameters is within the skill of the art.

According to the invention the heterophasic propylene copolymer (RAHECO) or the heterophasic propylene copolymer (Pre-RAHECO) is obtained by a multistage polymerization process, as described above, in the presence of a catalyst system comprising as component (i) a Ziegler-Natta procatalyst which contains a trans-esterification product of a lower alcohol and a phthalic ester.

According to the invention the heterophasic propylene copolymer (RAHECO) or the heterophasic propylene copolymer (Pre-RAHECO) is obtained by a multistage polymerization process, as described above, in the presence of a Ziegler-Natta olefin polymerization catalyst comprising a component in the form of particles having a predetermined size range which has been produced in a process comprising:

a) preparing a solution of a complex of a Group 2 metal and an electron donor by reacting a compound of said metal with said electron donor or a precursor thereof in an organic liquid reaction medium,

b) reacting said complex in solution with a compound of a transition metal, preferably of any of groups 4 - 6, to produce an emulsion the dispersed phase of which containing more than 50 mol% of the Group 2 metal in said complex.

c) maintaining the particles of said dispersed phase within the average size range of 5 to 200 micrometers, preferably 10 to 100 micrometers, even more preferably 20 to 50 micrometers by agitation in the presence of an emulsion stabilizer and

d) solidifying said particles, and recovering, optionally washing said particles to obtain said catalyst component.

The group 2 metal used in the preparation of the catalyst is preferably magnesium and the liquid organic medium for reacting the group 2 metal compound preferably comprises a $C_6$-$C_{10}$ aromatic hydrocarbon, preferably toluene.

An electron donor compound to be reacted with the group 2 metal compound preferably is a mono- or diester of an aromatic carboxylic acid or diacid, the latter being able to form a chelate-like structured complex. Said aromatic carboxylic acid ester or diester can be formed in situ by reaction of an aromatic carboxylic acid chloride or diacid dichloride with a $C_2$-$C_{16}$ alkanol and/or diol, and is preferably dioctyl phthalate or bis-(2-ethylhexyl) phthalate.

The reaction for the preparation of the group 2 metal complex is generally carried out at a temperature of 20 to 80 °C, and in case that the group 2 metal is magnesium, the preparation of the magnesium complex may advantageously be carried out at a temperature of 50 to 70 °C.

The compound of a group 4-6 metal is preferably a compound of a group 4 metal. The group 4 metal is preferably titanium, and its compound to be reacted with the complex of a group 2 metal is preferably a halide.

In a still further embodiment of the invention, the compound of a group 4-6 metal can also be selected from group 5 and group 6 metals, such as Cu, Fe, Co, Ni and/or Pd compounds. In a preferred embodiment of the production process of the catalyst a turbulence minimizing agent (TMA) is added to the reaction mixture before solidifying said particles of the dispersed phase, the TMA being inert and soluble in the reaction mixture under reaction conditions.

The turbulence minimizing agent (TMA) or mixtures thereof are preferably polymers having linear aliphatic carbon backbone chains, which might be branched with only short side chains in order to serve for uniform flow conditions when stirring. Said TMA is in particular preferably selected from alpha-olefin polymers having a high molecular weight Mw (as measured by gel permeation chromatography) of about 1 to 40 x $10^6$, or mixtures thereof. Especially preferred are polymers of alpha-olefin monomers with 6 to 20 carbon atoms, and more preferably polyoctene, polynonene, polydecene, polyundecene or polydodecene or mixtures thereof, having the molecular weight and general backbone structure as defined before. Most preferably the TMA is polydecene.

Usually, said turbulence minimizing agent can be added in any process step before particle formation starts, i.e. at the latest before solidification of the emulsion, and is added to the emulsion in an amount of 1 to 1000 ppm, preferably 5 to 100 ppm and more preferably 5 to 50 ppm, based on the total weight of the reaction mixture.

A preferred embodiment of the process for producing catalysts for preparing the heterophasic propylene copolymer (RAHECO) or the heterophasic propylene copolymer (Pre-RAHECO) of the present invention comprises: preparing a solution of a magnesium complex by reacting alkoxy magnesium compound and an electron donor or precursor thereof in a $C_6$-$C_{10}$ aromatic liquid reaction medium comprising $C_6$-$C_{10}$ aromatic hydrocarbon or a mixture of $C_6$-$C_{10}$ aromatic hydrocarbon and $C_5$-$C_9$ aliphatic hydrocarbon; reacting said magnesium complex with a compound of at least one fourvalent group 4 metal at a temperature greater than 10 °C and less than 60 °C, to produce an emulsion of a denser, $TiCl_4$/toluene-insoluble, oil dispersed phase having a group 4 metal/Mg mol ratio of 0.1 to 10 in an oil disperse phase having a group 4 metal/Mg mol ratio of 10 to 100; maintaining the droplets of said dispersed phase within the size range of 5 to 200 micrometers by agitation in the presence of an emulsion stabilizer while heating the emulsion to solidify said droplets and adding turbulence minimizing agent into the reaction mixture before solidifying said droplets of the dispersed phase, said turbulence minimizing agent being inert and soluble in the reaction mixture under reaction conditions; and solidifying said particles of the dispersed phase by heating and recovering the obtained catalyst particles.

The said disperse and dispersed phases are thus distinguishable from one another by the fact that the denser oil, if contacted with a solution of titanium tetrachloride in toluene, will not dissolve in it. A suitable $TiCl_4$/toluene solution for establishing this criterion would be one having a $TiCl_4$/toluene mol ratio of 0.1 to 0.3. The disperse and dispersed phase are also distinguishable by the fact that the great preponderance of the Mg provided (as complex) for the reaction with the group 4 metal compound is present in the dispersed phase, as revealed by comparison of the respective group 4 metal /Mg mol ratios.

In effect, therefore, virtually the entirety of the reaction product of the Mg complex with the group 4 metal, which is the precursor of the final catalyst, becomes the dispersed phase, and proceeds through further processing steps to the final dry particulate form. The disperse phase, still containing a useful quantity of group 4 metal, can be reprocessed for recovery of that metal.

The production of a two-phase, rather than a single phase reaction product is encouraged by carrying out the Mg complex/group 4 metal compound reaction at low temperature, specifically above 10 °C but below 60 °C, preferably between 20 and 50 °C. Since the two phases will naturally tent to separate into a lower, denser phase and a supernatant lighter phase, it is necessary to maintain the reaction product as an emulsion by agitation, preferably in the presence of an emulsion stabilizer.

The resulting particles from the dispersed phase of the emulsion are of a size, shape (spherical) and uniformity which render the final catalyst extremely effective in olefin polymerization. This morphology is preserved during the heating to solidify the particles, and of course throughout the final washing and drying steps. It is, by contrast, difficult to the point of impossibility to achieve such morphology through precipitation, because of the fundamental uncontrollability of nucleation and growth, and the large number of variables which affect these events.

The electron donor is preferably an aromatic carboxylic acid ester, particularly favored esters being dioctyl phthalate and bis-(2-ethylhexyl) phthalate. The donor may conveniently be formed in situ by reaction of an aromatic carboxylic acid chloride precursor with a $C_2$-$C_{16}$ alkanol and/or diol. The liquid medium preferably comprises toluene.

Furthermore, emulsifying agents/emulsion stabilizers can be used additionally in a manner known in the art for facilitating the formation and/or stability of the emulsion. For said purposes e.g. surfactants, e.g. a class based on acrylic or methacrylic polymers can be used.

Preferably, said emulsion stabilizers are acrylic or methacrylic polymers, in particular those with medium sized ester side chains having more than 10, preferably more than 12 carbon atoms and preferably less than 30, and preferably 12 to 20 carbon atoms in the ester side chain. Particularly preferred are unbranched $C_{12}$ to $C_{20}$ acrylates such as poly(hexadecyl)-metacrylate and poly(octadecyl)-metacrylate.

It has been found that the best results are obtained when the group 4 metal/Mg mol ratio of the denser oil is 1 to 5, preferably 2 to 4, and that of the disperse phase oil is 55 to 65. Generally, the ratio of the mol ratio of group 4 metal/Mg in the disperse phase oil to that in the denser oil is at least 10.

Solidification of the dispersed phase droplets by heating is suitably carried out at a temperature of 70 to 150 °C, usually at 90 to 110 °C.

The finally obtained catalyst is desirably in the form of particles having average size ranges of 5 to 200 micrometers, preferably 10 to 100 micrometers, more preferably 20 to 50 micrometers.

The reagents can be added to the aromatic reaction medium in any order. However, it is preferred that in a first step the alkoxy magnesium compound is reacted with a carboxylic acid halide precursor of the electron donor to form an intermediate; and in a second step the obtained product is further reacted with the group 4 metal. The magnesium compound preferably contains from 1 to 20 carbon atoms per alkoxy group, and the carboxyl acid should contain at least 8 carbon atoms.

Reaction of the magnesium compound, carboxylic acid halide and alcohol proceeds satisfactorily at temperatures in the range of 20 to 80 °C, preferably 50 to 70 °C. The product of that reaction, the "Mg complex", is reacted with the group 4 metal compound at a lower temperature, to bring about the formation of a two-phase, oil-in-oil, product.

The reaction medium used as solvent can be aromatic or a mixture of aromatic and aliphatic hydrocarbons, the latter one containing preferably 5 to 9 carbon atoms, more preferably 5 to 7 carbon atoms, or mixtures thereof. Preferably, the liquid reaction medium used as solvent in the reaction is aromatic and is more preferably selected from hydrocarbons such as substituted and unsubstituted benzenes, preferably from alkylated benzenes, even more preferably from toluene and the xylenes, and most preferably being toluene. The molar ratio of said aromatic medium to magnesium is preferably less than 10, for instance from 4 to 10, preferably from 5 to 9.

The alkoxy magnesium compound group is preferably selected from the group consisting of magnesium dialkoxides, complexes of magnesium dihalide and an alcohol, and complexes of a magnesium dihalide and a magnesium dialkoxide. It may be a reaction product of an alcohol and a magnesium compound selected from the group consisting of dialkyl magnesium, alkyl magnesium alkoxides, alkyl magnesium halides and magnesium dihalides. It can further be selected from the group consisting of dialkyloxy magnesiums, diaryloxy magnesiums, alkyloxy magnesium halides, aryloxy magnesium halides, alkyl magnesium alkoxides, aryl magnesium alkoxides, and alkyl magnesium aryloxides.

The magnesium dialkoxide may be the reaction product of a magnesium dihalide such as magnesium dichloride or a dialkyl magnesium of the formula $R'_x R''_y M_g$, wherein x + y = 2 and x and y are in the range of 0.3 to 1.7 and each one of R' and R" is a similar or different $C_1$-$C_{20}$ alkyl, preferably a similar or different $C_4$-$C_{10}$ alkyl. Typical magnesium alkyls are ethylbutyl magnesium, dibutyl magnesium, dipropyl magnesium, propylbutyl magnesium, dipentyl magnesium, butylpentyl magnesium, butyloctyl magnesium and dioctyl magnesium. Preferably R' is a butyl group and R" is an octyl group, i.e. the dialkyl magnesium compound is butyloctyl magnesium, most preferably the dialkyl magnesium compound is $Mg[(Bu)_{1.5}(Oct)_{0.5}]$.

Dialkyl magnesium, alkyl magnesium alkoxide or magnesium dihalide can react with a polyhydric alcohol $R(OH)_m$, with m being in the range of 2-4, or a monohydric alcohol ROH or mixtures thereof.

Typical $C_2$ to $C_6$ polyhydric alcohol may be straight-chain or branched and include ethylene glycol, propylene glycol, trimethylene glycol, 1,2-butylene glycol, 1,3- butylene glycol, 1,4-butylene glycol, 2,3-butylene glycol, 1,5-pentanediol, 1,6-hexanediol, 1,8-octanediol, pinacol, diethylene glycol, triethylene glycol, and triols such as glycerol, methylol propane and pentaerythritol.

The aromatic reaction medium may also contain a monohydric alcohol, which may be straight or branched chain. Typical $C_1$-$C_5$ monohydric alcohols are methanol, ethanol, n-propanol, iso-propanol, n-butanol, iso-butanol, sec. butanol, tert. butanol, n-amyl alcohol, iso-amyl alcohol, sec. amyl alcohol, tert. amyl alcohol, diethyl carbinol, akt. amyl alcohol, sec. isoamyl alcohol, tert. butyl carbinol. Typical $C_6$-$C_{10}$ monohydric alcohols are hexanol, 2-ethyl-1-butanol, 4-methyl-2-pentanol, 1-heptanol, 2-heptanol, 4-heptanol, 2,4-dimethyl-3-pentanol, 1-octanol, 2-octanol, 2-ethyl-1-hexanol, 1-nonanol, 5-nonanol, diisobutyl carbinol, 1-decanol, and 2,7-dimethyl-2-octanol. Typical > $C_{10}$ monohydric alcohols are n-1-undecanol, n-1-dodecanol, n-1-tridecanol, n-1-tetradecanol, n-1-pentadecanol, n-1-hexadecanol, n-1-heptadecanol, and n-1-octadecanol. The monohydric alcohols may be unsaturated, as long as they do not act as catalyst poisons.

Preferable monohydric alcohols are those of formula ROH in which R is a $C_2$-$C_{16}$ alkyl group, most preferably a $C_4$-$C_{12}$ alkyl group, particularly 2-ethyl-1-hexanol or 1-octanol. Preferably, essentially all of the aromatic carboxylic acid ester is a reaction product of a carboxylic acid halide, preferably a dicarboxylic acid dihalide, more preferably an unsaturated dicarboxylic acid dihalide, most preferably phthalic acid dichloride, with the monohydric alcohol.

The compound of a fourvalent group 4 metal containing a halogen is preferably a titanium tetrahalide. Equivalent to titanium tetrahalide is the combination of an alkoxy titanium halide and a halogenation agent, which are able to form a titanium tetrahalide in situ. The most preferred halide is the chloride.

As is known, the addition of the at least one halogenated hydrocarbon during the catalyst preparation process can lead to further improved catalytic activity. Reactive halogenated hydrocarbons preferably have the formula $R'''X'''_n$, wherein R''' is a $C_1$-$C_{20}$ hydrocarbyl group, particularly a $C_1$-$C_{10}$ aliphatic hydrocarbyl group, X''' is a halogen, preferably chlorine, and n is an integer from 1 to 4.

Such chlorinated hydrocarbons include monochloromethane, dichloromethane, trichloromethane (chloroform), tetrachloromethane, monochloroethane, (1,1)-dichloroethane, (1,1)-dichloroethane, (1,1,1)-trichloroethane, (1,1,2)-trichloroethane, (1,1,1,2)-tetrachlororethane, (1,1,2,2)-tetrachloroethane, pentachloroethane, hexachloroethane, 1-chloropropane, 2-chloropropane, (1,2)-dichloropropane, (1,3)-dichloropropane, (1,2,3)-trichloropropane, 1-chlorobutane, 2-chlorobutane, isobutyl chloride, tert. butyl chloride, (1,4)-dichlorobutane, 1-chloropentane, and (1,5)-dichloropentane. The chlorinated hydrocarbons may also be unsaturated, provided that the unsaturation does not act as catalyst poison in the final catalyst.

In the above formula, R''' is preferably a $C_1$-$C_{10}$ alkyl group, X''' is preferably chlorine and n is preferably 1 or 2. Preferred compounds include butyl chloride (BuCl), dichloroalkanes such as (1,4)-dichlorobutane, and tertiary butyl chloride.

The catalyst preparation as described herein can be carried out batchwise, semi-continuously or continuously. In such a semi-continuous or continuous process, the solution of the complex of the group 2 metal and said electron donor, which is prepared by reacting the compound of said metal with said electron donor in an organic liquid reaction medium, is mixed with at least one compound of a transition metal which might be solved in the same or different organic liquid reaction medium. The so obtained solution is then agitated, possibly in the presence of an emulsion stabilizer, and then the agitated emulsion is fed into a temperature gradient reactor, in which the emulsion is subjected to a temperature gradient, thus leading to solidifying the droplets of a dispersed phase of the emulsion. The TMA is preferably contained in the solution of the complex or added to the solution before feeding the agitated solution to the temperature gradient reactor.

When feeding said agitated emulsion to the temperature gradient reactor, an inert solvent, in which the droplets are not soluble, can additionally be fed into that gradient reactor in order to improve that droplet formation and thus leading to a uniform grain size of the particles of the catalyst, which are formed in the temperature gradient reactor when passing through said line. Such additional solvent might be the same as the organic liquid reaction medium, which is used for preparing the solution of the complex of the group 2 metal as explained above in more detail.

The solidified particles of the catalyst can subsequently be recovered by an in-stream filtering unit and are preferably subjected to washing in order to remove unreacted starting components.

The recovered particulate product is washed at least once, preferably at least twice, most preferably at least three times with a hydrocarbon, which is preferably selected from aromatic and aliphatic hydrocarbons, preferably with toluene, particularly with hot (e.g. 90 °C) toluene, which may include a small amount, preferably about 0.01 - 10 vol% of $TiCl_4$ or an alkyl aluminium chloride, such as diethyl aluminium chloride (DEAC), in it. A further washing step is advantageously performed with heptane, most preferably with hot (e.g. 90 °C) heptane, and a still further washing step with pentane. A washing step typically includes several substeps. A favored washing sequence is, for example, one washing step with toluene at 90 °C, two washing steps with heptane at 90 °C and one or two washing steps with pentane at room temperature.

Finally, the washed catalyst is dried, e.g. by evaporation or flushing with nitrogen.

After washing and drying the catalyst can be stored for further use or can be subjected to further treatment steps or can immediately be fed to a polymerization reactor.

The catalyst system which is used according to the present invention also comprises an aluminium alkyl compound, preferably of the general formula $AlR_{3-n}X_n$ wherein R stands for straight chain or branched alkyl group having 1 to 20, preferably 1 to 10 and more preferably 1 to 6 carbon atoms, X stands for halogen and n stands for 0, 1, 2 or 3, which aluminium alkyl compound is added, and brought into contact with the droplets of the dispersed phase of the agitated emulsion before recovering the solidified particles of the catalyst.

It is further preferred that at least a part of the aluminium compound is added, in pure form or in the form of a solution, from shortly before the beginning of the emulsion formation until adding it to the washing liquid, e.g. toluene, in such an amount that the final Al content of the particles is from 0.05 to 1 wt%, preferably 0.1 to 0.8 wt% and most preferably 0.2 to 0.7 wt%. by weight of the final catalyst particles. The most preferred Al content may vary depending upon the type of the Al compound and on the adding step. For example, in some cases the most preferred amount may be 0.1 to 0.4 wt%.

Still further, preferably tri-$(C_1-C_6)$-alkyl aluminium compounds are used, tiethylaluminium being most preferred.

In Ziegler-Natta catalysts alumimium alkyl compounds are used as cocatalysts, i.e. for activating the catalyst. During activation of polypropylene catalysts, alkyl aluminium does not only reduce and alkylate the actice metal, but it has also influence on the donor composition. It is well-known that alkyl aluminium compounds can remove carboxylic acid esters, which are used as internal donors. Simultaneously, external donors can be fixed on the catalyst. Typically, tri-ethyl aluminium (TEAI) is used as cocatalyst and silanes as external donors as is disclosed e.g. in articles Sacci, M. C.; Forlini, F.; Tritto, I and Locatelli, P., Macromolecules, 1996, 29, 3341-3345 and Sacci, M. C.; Tritto, I.; Shan, C. and Mendichi, R., Macromolecules, 1991, 24, 6823-6826.

In the catalysts used in the present invention, the internal donor, preferably bis-(2-ethylhexyl) phthalate (DOP), can be significantly extracted from the catalyst with the use of the alkyl aluminium compound. The extraction level is dependent on the concentration of the aluminium alkyl. The higher the concentration, the more of the internal donor can be extracted. Further, the addition of the external donor together with aluminium alkyl improves the donor exchange. The longer the reaction time is, the more external donor is bound on the catalyst.

Particularly preferred external donors are any of the following: cyclohexyl methyl dimethyloxysilane, dicyclopentyl dimethoxysilane, diisopropyl dimethoxysilane, di-isobutyl dimethoxysilane and di-tert.-butyl dimethoxysilane. Most preferred are cyclohexyl methyl dimethoxysilane and dicyclopentyl dimethoxysilane, cyclohexyl methyl dimethoxysilane being particularly preferred. Especially preferred are dicyclopentyl dimethoxy silane [$Si(OCH_3)_2(cyclo-pentyl)_2$] cyclohexyl methyl dimethoxysilane [$Si(OCH_3)_2(CH_3)(cyclo-hexyl)_2$] and diisopropyl dimethoxy silane

$[Si(OCH_3)_2(CH(CH_3)_2)_2]$.

As external donor for the catalysts system preferably an external donor represented by formula (III) is used

$$Si(OCH_3)_2R_2^5 \qquad (III)$$

wherein $R^5$ represents a branched-alkyl group having 3 to 12 carbon atoms, preferably a branched-alkyl group having 3 to 6 carbon atoms, or a cyclo-alkyl having 4 to 12 carbon atoms, preferably a cyclo-alkyl having 5 to 8 carbon atoms.

It is in particular preferred that $R^5$ is selected from the group consisting of iso-propyl, isobutyl, iso-pentyl, tert.-butyl, tert.-amyl, neopentyl, cyclopentyl, cyclohexyl, methylcyclopentyl and cycloheptyl.

More preferably the external donor is selected from the group consisting of diethylaminotriethoxysilane $[Si(OCH_2CH_3)_3(N(CH_2CH_3)_2)]$, dicyclopentyl dimethoxy silane $[Si(OCH_3)_2(cyclo-pentyl)_2]$, cylohexylmethyldimethoxysilane $[Si(OCH_3)_2CH_3(cyclo-hexyl)]$, diisopropyl dimethoxy silane $[Si(OCH_3)_2(CH(CH_3)_2)_2]$ and mixtures thereof.

It is preferred that a solution containing alkyl aluminium and external donor in an organic solvent, e.g. pentane, are added to the catalyst after solidification of the catalyst particles.

The catalyst which is obtained by the above described process is a non-supported Ziegler-Natta catalyst. Non-supported catalysts do not use any external carrier, contrary to conventional catalysts, e.g. conventional Ziegler-Natta catalysts, which are e.g. supported on silica or $MgCl_2$.

Further preferred embodiments of the catalyst system production include all preferred embodiments as described in WO 03/000754.

As already identified above, the heterophasic propylene copolymer (Pre-RAHECO) is subjected a visbreaking step obtaining thereby the heterophasic propylene copolymer (RAHECO). The visbreaking may be carried out in any known manner, but typically the present invention envisages chemical visbreaking using a peroxide visbreaking agent. Typical visbreaking agents are 2,5-dimethyl-2,5-bis(tert.butyl-peroxy)hexane (DHBP) (for instance sold under the tradenames Luperox 101 and Trigonox 101), 2,5-dimethyl-2,5-bis(tert.butyl-peroxy)hexyne-3 (DYBP) (for instance sold under the tradenames Luperox 130 and Trigonox 145), dicumyl-peroxide (DCUP) (for instance sold under the tradenames Luperox DC and Perkadox BC), di-tert.butyl-peroxide (DTBP) (for instance sold under the tradenames Trigonox B and Luperox Di), tert.butyl-cumyl-peroxide (BCUP) (for instance sold under the tradenames Trigonox T and Luperox 801) and bis (tert.butylperoxyisopropyl)benzene (DIPP) (for instance sold under the tradenames Perkadox 14S and Lupperox DC). Suitable amounts of peroxide to be employed in accordance with the present invention are in principle known to the skilled person and can easily be calculated on the basis of the amount of heterophasic propylene copolymer (Pre-RAHECO) to be subjected to visbreaking, the $MFR_2$ (230 °C) value of the heterophasic propylene copolymer (Pre-RAHECO) to be subjected to visbreaking and the desired target $MFR_2$ (230 °C) of the product, i.e. the heterophasic propylene copolymer (RAHECO), to be obtained. Accordingly, typical amounts of peroxide visbreaking agent are from 0.005 to 0.5 wt.-%, more preferably from 0.01 to 0.2 wt.-%, based on the amount of propylene polymer employed. As indicated above the visbraking is accomplished parallel to the mixing of the hetrophasic propylene copolymer (Pre-RAHECO) with the other components required for the present invention (see below).

**Plastomer (P)**

A further essential requirement is the present of a plastomer (P). The plastomer (P) is (chemically) different to the elastomeric copolymer (E) of the heterophasic propylene copolymer (RAHECO). More precisely the plastomer (P) is a linear low density polyethylene (LLDPE). Accordingly the plastomer (P), i.e. the linear low density polyethylene (LLDPE), has a density measured according to ISO 1183-187 in the range 820 to 950 kg/m$^3$, more preferably in the range of 850 to 900 kg/m$^3$, yet more preferably in the range of 840 to 890 kg/m$^3$, like in the range of 860 to 890 kg/m$^3$.

Further the plastomer (P), i.e. the linear low density polyethylene (LLDPE), is featured by a specific melt flow rate, namely by a melt flow rate $MFR_2$ (190 °C) measured according to ISO 1133 of equal or more than 15.0 g/10min, more preferably in the range of more than 15.0 to 100.0 g/10min, still more preferably in the range of 20.0 to 60.0 g/10min.

Preferably the plastomer (P), i.e. the linear low density polyethylene (LLDPE), is a copolymer containing as a major part units derivable from ethylene. Accordingly it is appreciated that the plastomer (P), i.e. the linear low density polyethylene (LLDPE), comprises at least 50.0 wt.-% units derivable from ethylene, more preferably at least 55.0 wt.-% of units derived from ethylene. Thus it is appreciated that the plastomer (P), i.e. the linear low density polyethylene (LLDPE), comprises 50.0 to 85.0 wt.-%, more preferably 60.0 to 78 wt.-%, units derivable from ethylene. The comonomers present in the plastomer (P), i.e. the linear low density polyethylene (LLDPE), are $C_4$ to $C_{20}$ $\alpha$-olefins, like 1-butene, 1-hexene and 1-octene, the latter especially preferred. Accordingly in one specific embodiment the plastomer (P), i.e. the linear low density polyethylene (LLDPE), is an ethylene-1-octene polymer with the amounts given in this paragraph.

**Polysiloxane (PS)**

Any polysiloxane can be used. Esspecially preferred is a high molecular weight polysiloxane or a ultra-high molecular weight polysiloxane. It is in particular preferred that the polysiloxane is a polydialkylsiloxane, like a high molecular weight polydialkylsiloxane or ultra-high molecular weight polydialkylsiloxane.

A preferred polydialkylsiloxane, i.e. a preferred high molecular weight polydialkylsiloxane or a preferred ultra-high molecular weight polydialkylsiloxane, is a polydialkylsiloxane having a $C_1$ to $C_4$ alkyl group, such as polydimethylsiloxane, polydiethylsiloxane, polymethylethylsiloxane, polydipropylsiloxane and polydibutylsiloxane.

The molecular weights of the polysiloxane, like the polydialkylsiloxane, e.g. polydimethylsiloxane, in terms of kinematic viscosity is at least 5,000,000 cSt, preferably at least 10,000,000 cSt, and more preferably at least 15,000,000 cSt. Accordingly typical ranges are 5,000,000 to 30,000,000 cSt, more preferably 10,000,000 to 25,000,000 cSt.

The polysiloxanes may be used as pure materials or mixed via extrusion with various thermoplastics. Thus in certain embodiments, the polysiloxane, like the polydialkylsiloxane, e.g. polydimethylsiloxane, is provided as a masterbatch and thus is mixed with a polyolefin, such as polyethylene, polypropylene or a combination thereof. Preferably the polyolefin is a propylene homopolymer, for instance a propylene homopolymer with a melt flow rate $MFR_2$ (230°C) in the range of 8 to 18 g/10min. Typically the amount of polysiloxane present in such masterbatches is at least 25 wt.-%, more preferably 25 to 60 wt.-%, like 40 to 60 wt.-%, still more preferably 45 to 55 wt.-%, like 50 to 52 wt.-%. Some non-limiting examples of such polysiloxane mixtures include DOW CORNING MB50 series Masterbatches such as DOW CORNING MB50-001, MB50-002, MB50-313, MB50-314 and MB50-321, especially MB50-001, all of which are available from Dow Coming Corporation, Midland, MI.

**Antiblocking agent (AB)**

Any antiblocking agent can be used. Especially preferred is that the antiblocking agent (AB) is a silicon dioxide and/or silicate. Preferably the antiblocking agent (AB) is a silicon dioxide ($SiO_2$), like a synthetic silicon dioxide. Typically the silicon dioxide has pore volume in the range of 0.8 to 1.2 ml/g and/or a particle size of 3.5 to 6.0 $\mu$m.

**Slip agent (SA)**

Any slip agent can be used. However it is preferred that the slip agent (SA) is fatty acid amide derivative, more preferably an unsaturated fatty acid amid derivative. More preferably the unsaturated fatty acid amid is mono-unsaturated, i.e. contains only one ethylene group.

Accordingly in one embodiment the unsaturated fatty acid amide is

$$CH_3(CH_2)_xCH=CH(CH_2)_yCONH_2$$

with x and y being independent from each other positive integers.
more preferably $CH_3(CH_2)_xCH=CH(CH_2)_yCONH_2$
with x and y being independent from each other positive integers.

In one preferred embodiment the x is a positive integer between 4 and 10 and/or y is a positive integer between 8 and 14, preferably x = 7 and y = 11.

Thus it is especially preferred that the unsaturated fatty acid amide is $CH_3(CH_2)_7CH=CH(CH_2)_{11}CONH_2$, i.e. erucamide.

**Preparation of the polypropylene composition**

The polypropylene composition of the present invention can be prepared by any suitable method known in the art, such as by blending the heterophasic propylene copolymer (RAHECO), the plastomer (P), the polysiloxane (PS), and optionally the antiblocking agent (AB) and the slip agent (SA) as well as any optional further additives, either directly, e.g., in an extruder, such that the same extruder is used to make the finished product, or by pre-melt mixing in a separate mixer or extruder. For mixing, a conventional compounding or blending apparatus, e.g. a Banbury mixer, a 2- roll rubber mill, Buss-co-kneader or a twin screw extruder may be used. In case the heterophasic material must be degraded is preferred that the heterophasic propylene copolymer (Pre-RAHECO), is extruded together with the polysiloxane (PS) and a peroxide visbreaking agent as mentioned in the section "heterophasic propylene copolymer". Also the other optional components, like the antiblocking agent (AB) and the slip agent (SA), are added in the extruder.

**Articles**

The present invention is not only directed to the polypropylene composition as such but also to the articles comprising the instant polypropylene composition. Accordingly the article comprises at least 70 wt.-%, like 70 to 99 wt.-% or 70 to 100 wt.-%, preferably at least 80 wt.-%, like 80 to 99 wt.-% or 80 to 100 wt.-%, more preferably at least 95 wt.-%, like 95 to 99 wt.-% or 95 to 100 wt.-%, yet more preferably consists of, the instant polypropylene composition.

The articles according to this invention are injection molded articles, in particular thin-walled articles, like thin-wall tubes. The term "thin-walled" shall preferably express a thickness of not more than 2 mm, more preferably in the range of 0.5 to 2.0 mm, yet more preferably in the range of 0.8 to 1.8, still more preferably in the range of 1.0 to 1.5 mm, still yet more preferably in the range of 1.0 to 1.2 mm.

The present invention will now be described in further detail by the examples provided below.

**EXAMPLE**

**1. Measuring Methods**

The following definitions of terms and determination methods apply for the above general description of the invention as well as to the below examples unless otherwise defined. **Calculation** of comonomer content of the second propylene copolymer fraction (R-PP2) and (Pre-R-PP2), respectively:

$$\frac{C(PP) - w(PP1)\, x\, C(PP1)}{w(PP2)} = C(PP2) \quad (I)$$

wherein

w(PP1)    is the weight fraction [in wt.-%] of the first propylene copolymer fraction (R-PP1) and (Pre-R-PP1), respectively,

w(PP2)    is the weight fraction [in wt.-%] of second propylene copolymer fraction (R-PP2) and (Pre-R-PP2), respectively,

C(PP1)    is the comonomer content [in wt.-%] of the first propylene copolymer fraction (R-PP1) and (Pre-R-PP1), respectively,

C(PP)    is the comonomer content [in wt.-%] of the random propylene copolymer (R-PP) and (Pre-R-PP),

C(PP2)    is the calculated comonomer content [in wt.-%] of the second propylene copolymer fraction (R-PP2) and (Pre-R-PP2), respectively.

**Calculation** of the xylene cold soluble (XCS) content of the second propylene copolymer fraction (R-PP2) and (Pre-R-PP2), respectively:

$$\frac{XS(PP) - w(PP1)\, x\, XS(PP1)}{w(PP2)} = XS(PP2) \quad (II)$$

wherein

w(PP1)    is the weight fraction [in wt.-%] of the first propylene copolymer fraction (R-PP1) and (Pre-R-PP1), respectively,

w(PP2)    is the weight fraction [in wt.-%] of second propylene copolymer fraction (R-PP2) and (Pre-R-PP2), respectively,

XS(PP1)    is the xylene cold soluble (XCS) content [in wt.-%] of the first propylene copolymer fraction (R-PP1) and (Pre-R-PP1), respectively,

XS(PP)    is the xylene cold soluble (XCS) content [in wt.-%] of the random propylene copolymer (R-PP) and (Pre-R-PP),

XS(PP2)    is the calculated xylene cold soluble (XCS) content [in wt.-%] of the second propylene copolymer fraction (R-PP2) and (Pre-R-PP2), respectively.

**Calculation** of melt flow rate $MFR_2$ (230 °C) of the second propylene copolymer fraction (R-PP2) and (Pre-R-PP2), respectively:

$$MFR(PP2) = 10^{\left[\frac{\log(MFR(PP))-w(PP1)\,x\,\log\,(MFR(PP1))}{w(PP2)}\right]} \quad (I)$$

wherein

w(PP1)    is the weight fraction [in wt.-%] of the first propylene copolymer fraction (R-PP1) and (Pre-R-PP1), respectively,

w(PP2)    is the weight fraction [in wt.-%] of second propylene copolymer fraction (R-PP2) and (Pre-R-PP2), respectively,

MFR(PP1)    is the melt flow rate $MFR_2$ (230 °C) [in g/10min] of the first propylene copolymer fraction (R-PP1) and (Pre-R-PP1), respectively,

MFR(PP)    is the melt flow rate $MFR_2$ (230 °C) [in g/10min] of the random propylene copolymer (R-PP) and (Pre-R-PP),

MFR(PP2)    is the calculated melt flow rate $MFR_2$ (230 °C) [in g/10min] of the second propylene copolymer fraction (R-PP2) and (Pre-R-PP2), respectively.

**Calculation** of comonomer content of the elastomeric propylene copolymer (E) and (Pre-E), respectively:

$$\frac{C(RAHECO) - w(PP)x\,C(PP)}{w(E)} = C(E) \quad (IV)$$

wherein

w(PP)    is the weight fraction [in wt.-%] of the random propylene copolymer (R-PP) and (Pre-R-PP),

w(E)    is the weight fraction [in wt.-%] of the elastomeric propylene copolymer (E) and (Pre-E), respectively,

C(PP)    is the comonomer content [in wt.-%] of the random propylene copolymer (R-PP) and (Pre-R-PP),

C(RAHECO)    is the comonomer content [in wt.-%] of the heterophasic propylene copolymer (RAHECO)

C(E)    is the calculated comonomer content [in wt.-%] of elastomeric propylene copolymer (E) and (Pre-E), respectively.

**Calculation** of xylene cold soluble (XCS) content of the third polypropylene (PP3):

$$\frac{XS(RAHECO) - w(PP)x\,XS(PP)}{w(E)} = XS(E) \quad (V)$$

wherein

w(PP)    is the weight fraction [in wt.-%] of the random propylene copolymer (R-PP) and (Pre-R-PP),

w(E)    is the weight fraction [in wt.-%] of the elastomeric propylene copolymer (E) and (Pre-E), respectively,

XS(PP)    is the xylene cold soluble (XCS) content [in wt.-%] of the random propylene copolymer (R-PP) and (Pre-R-PP),

XS(RAHECO)    is the xylene cold soluble (XCS) content [in wt.-%] of the heterophasic propylene copolymer (RAHECO)

XS(E)    is the calculated xylene cold soluble (XCS) content [in wt.-%] of elastomeric propylene copolymer (E) and (Pre-E), respectively.

The **Density** was measured according to ISO 1183-1 - method A (2004). Sample preparation is done by compression moulding in accordance with ISO 1872-2:2007.

**Quantification of comonomer content by FTIR spectroscopy**

The comonomer content is determined by quantitative Fourier transform infrared spectroscopy (FTIR) after basic assignment calibrated via quantitative $^{13}$C nuclear magnetic resonance (NMR) spectroscopy in a manner well known in the art. Thin films are pressed to a thickness of 250 $\mu$m and spectra recorded in transmission mode.

Specifically, the ethylene content of a polypropylene-co-ethylene copolymer is determined using the baseline corrected peak area of the quantitative bands found at 720-722 and 730-733 $cm^{-1}$. Propylene-1-butene-copolymers were evaluated at 767 $cm^{-1}$. Quantitative results are obtained based upon reference to the film thickness.

The **MFR$_2$ (230 °C)** was measured according to ISO 1133 (230 °C, 2.16 kg load).

The **MFR$_2$ (190 °C)** was measured according to ISO 1133 (190 °C, 2.16 kg load).

The **content of xylene cold solubles (XCS, wt.-%)** was determined at 25 °C according ISO 16152; first edition; 2005-07-01.

The **intrinsic viscosity** was measured according to DIN ISO 1628/1, October 1999 (in decalin at 135 °C).

**Flexural Modulus:** The flexural modulus was determined in 3-point-bending according to ISO 178 on injection molded specimens of 80 x 10 x 4 mm prepared in accordance with ISO 294-1:1996.

## Scratch visibility

To determine the scratch visibility a Cross Hatch Cutter Model 420P, manufactured by Erichsen, was used. For the tests, plaques of 70x70x4 mm size were cut from a moulded grained (grain parameters: average grain size = 1 mm, grain depth = 0.12 mm, conicity = 6°) plaque of size 140x200x4 mm. The minimum period between injection moulding of specimens and scratch-testing was 7 days.

For testing the specimens must be clamped in a suitable apparatus as described above. Scratches were applied at a force of 5 N using a cylindrical metal pen with a ball shaped end (radius = 0.5 mm $\pm$ 0.01). A cutting speed of 1000 mm/min was used.

A minimum of 20 scratches parallel to each other were brought up at a load of 10 N with a distance of 2 mm. The application of the scratches was repeated perpendicular to each other, so that the result was a scratching screen. The scratching direction should be unidirectional. The scratch visibility is reported as the difference of the luminance $\Delta L$ of the unscratched from the scratched areas. $\Delta L$ values were measured using a spectrophotometer that fulfils the requirements to DIN 5033. Light source for quantification of $\Delta L$ D65/10°. Measured $\Delta L$ values must be below a maximum of 1.5.

A detailed test description of the test method (Erichsen cross hatch cutter method) can be found in the article "Evaluation of scratch resistance in multiphase PP blends" by Thomas Koch and Doris Machl, published in POLYMER TESTING 26 (2007), p. 927-936.

## 2. **Examples**

The catalyst used in the polymerization process for the heterophasic propylene copoylmer (Pre-RAHECO) was prepared otherwise according to Example 8 of WO 2004/029112, except that diethylaluminium chloride was used as an aluminium compound (co-catalyst) instead of triethylaluminium. Dicyclo pentyl dimethoxy silane was used as donor. The aluminium to donor ratio is indicated in table 1.

The resulting the heterophasic propylene copoylmer (Pre-RAHECO) is mixed with the additional components as indicated in table 2 in a co-rotating twin-screw extruder (type: Coperion ZSK 57).

**Table 1:** Heterophasic propylene copoylmer (Pre-RAHECO)

| | | Pre-RAHECO |
|---|---|---|
| Al/donor ratio | [mol/mol] | 8 |
| **Loop** | | |
| MFR$_2$ | [g/10 min] | 8.0 |
| C2 content | [wt.-%] | 2.5 |
| **GPR1** | | |
| MFR$_2$ | [g/10 min] | 8.0 |
| C2 content produced in GPR1 | [wt.-%] | 5.0 |
| C2 content in GPR1 | [wt.-%] | 4.0 |
| **GPR2** | | |
| XCS | [wt.-%] | 23 |
| C2 content produced in GPR2 | [wt.-%] | 30.7 |
| C2 content in GPR2 | [wt.-%] | 8.0 |

(continued)

| Final | | |
|---|---|---|
| MFR$_2$ | [g/10min] | 7.0 |
| C2 content | [wt.-%] | 8.0 |
| XCS | [wt.-%] | 20.9 |
| C2 of XCS | [wt.-%] | 25 |
| IV of XCS | [dl/g] | 1.5 |
| split loop/GPR1/GPR2 | [wt.-%] | 34/51/15 |

**Table 2:** Polypropylene composition

| | | CE 1 | IE 1 | IE 2 | IE 3 | IE 4 |
|---|---|---|---|---|---|---|
| Pre-RAHECO | [wt.-%] | 100 | 86.4 | 86 | 85.6 | 85.2 |
| Platomer | [wt.-%] | 0 | 10 | 10 | 10 | 10 |
| POX | [wt.-%] | 0 | 2 | 2 | 2 | 2 |
| PS | [wt.-%] | 0 | 0.8 | 1.2 | 1.6 | 2.0 |
| SA | [wt.-%] | 0 | 0.6 | 0.6 | | 0.6 |
| AB | [wt.-%] | 0 | 0.15 | 0.15 | 0.15 | 0.15 |

Plastomer is the commercial ethylene octene copolymer "Engage 8401" of Dow Elastomers having a density of 0.885 g/cm$^3$, MFR$_2$ (190 °C) of 30 g/10min and 1-octene conetnt of 28 wt.-%.
POX 2,5-dimethyl-2,5-di-(tert. butylperoxy)hexane (POX 1 wt.% on polypropylene)
PS is the commercial ultra high weight polysiloxane masterbatch "MB50-001" of Dow, said masterbatch contains 50 wt.-% of of a propylene homopolymer and 50 wt.-% of an ultra high weight polysiloxane
SA is the commercial erucamide "Incroslip C" of Croda Chemical
AB is the commercial synthetic silica "Gasil AB725" of PQ Corporation having a pore volume 1.0 ml/g and particle size 5.3 $\mu$m.

**Table 2:** Properties of the compositions

| Parameter | | CE 1 | IE 1 | IE 2 | IE 3 | IE 4 |
|---|---|---|---|---|---|---|
| MFR$_2$ | [g/10min] | 8 | 64 | 58 | 62 | 50 |
| Flexural Modulus | [MPa] | 550 | 462 | 465 | 466 | 468 |
| Scratch visibility $\Delta$L | [-] | 0.73 | -0.08 | 0.04 | -0.02 | 0.01 |

## Claims

1. Polypropylene composition having a melt flow rate MFR$_2$ (230 °C) measured according to ISO 1133 of at least 30 g/10min, said composition comprises

   (a) a heterophasic propylene copolymer (RAHECO) comprising

   (a1) a random propylene copolymer (R-PP), and
   (a2) an elastomeric propylene copolymer (E),

said heterophasic propylene copolymer (RAHECO) has a total comonomer content of at least 5.0 wt.-% and a comonomer content in the xylene cold soluble (XCS) fraction in the range of 18.0 to 35.0 wt.-%,

(b) a plastomer (P) being different to the elastomeric propylene copolymer (E), and
(c) a polysiloxane (PS).

2. Polypropylene composition according to claim 1, wherein the composition comprises aditionally

(a) an antiblocking agent (AB)
and/or
(b) a slip agent (SA).

3. Polypropylene composition according to claim 1 or 2, wherein the polypropylene composition has a flexural modulus measured on injection molded specimens of 80 x 10 x 4 mm according to ISO 178 of not below 550 MPa.

4. Polypropylene composition according to claim 1 or 2, wherein the heterophasic propylene copolymer (RAHECO) has

(a) a melting temperature Tm determined by differential scanning calorimetry (DSC) in the range of 130 to 150 °C,
and/or
(b) a xylene cold soluble content (XCS) determined according ISO 16152 (25 °C) in the range of 15 to 50 wt.-%,
and/or
(c) a comonomer content in the range of 6.0 to 15.0 wt.-%,
and/or
(d) a melt flow rate $MFR_2$ (230 °C) in the range of 7.0 to 200.0 g/10min.

5. Polypropylene composition according to one of the preceding claims, wherein the xylene cold soluble (XCS) fraction of the heterophasic propylene copolymer (RAHECO) has

(a) a comonomer content in the range of 20.0 to 35.0 wt.-%,
and/or
(b) an intrinsic viscosity (IV) determined according to DIN ISO 1628/1, (in Decalin at 135 °C) in the range of 0.8 to below 2.0 dl/g.

6. Polypropylene composition according to one of the preceding claims, wherein the random propylene copolymer (R-PP) has a comonomer content in the range of 2.0 to 9.0 wt.-%.

7. Polypropylene composition according to one of the preceding claims, wherein the random propylene copolymer (R-PP) comprises at least two propylene copolymer fractions (R-PP 1) and (R-PP2), wherein the first propylene copolymer faction (R-PP1) has a comonomer content in the range of 1.0 to 6.0 wt.-%, wherein optionally further

(a) the second propylene copolymer fraction (R-PP2) has a higher comonomer content than the first propylene copolymer faction (R-PP 1)
and/or
(b)

$$[\text{R-PP}] - [\text{R-PP1}] \geq 0.5$$

wherein

[R-PP] the comonomer content [wt.-%] of the random propylene copolymer (R-PP), and
[R-PP1] the comonomer content [wt.-%] of the first propylene copolymer fraction (R-PP1),

and/or
(c) the second propylene copolymer fraction (R-PP2) has a comonomer content in the range of 2.5 to 12.0 wt.-%.

8. Polypropylene composition according to one of the preceding claims, wherein the comonomers of the random propylene copolymer (R-PP), the first propylene copolymer fraction (R-PP1), the second propylene copolymer fraction (R-PP2), and of the elastomeric propylene copolymer (E) are ethylene and/or $C_4$ to $C_{12}$ $\alpha$-olefin.

9. Polypropylene composition according to one of the preceding claims, wherein the plastomer (P) is a linear low density polyethylene (LLDPE).

10. Polypropylene composition according to one of the preceding claims, wherein the plastomer (P)

(a) comprises units derived from ethylene and at least one C4 to C20 $\alpha$-olefin and/or
(b) has an ethylene content of at least 50 wt.-%.

11. Polypropylene composition according to one of the preceding claims, wherein the plastomer (P) has

(a) a density measured according to ISO 1183-187 in the range 820 to 900 kg/m$^3$ and/or
(b) a melt flow rate $MFR_2$ (190 °C) measured according to ISO 1133 of at least 15.0 g/10min.

12. Polypropylene composition according to one of the preceding claims, wherein the polysiloxane (PS) is a ultra-high molecular weight polysiloxane, preferably a ultra-high molecular weight polysiloxane having a kinematic viscosity of at least 10,000,000 cSt.

13. Polypropylene composition according to one of the preceding claims, wherein

(a) the antiblocking agent (AB) is silicon dioxide or a silicate
and/or
(b) the slip agent (SA) is a fatty acid amide.

14. A process for the preparation of the polypropylene composition according to one of the preceding claims, wherein

(A) the heterophasic propylene copolymer (RAHECO), the plastomer (P), the polysiloxane (PS), and optionally the slip agent (SA) and/or the antiblocking agent (AB) are extruded in an extruder obtaining thereby the polypropylene composition according to one of the preceding claims, wherein preferably the heterophasic propylene copolymer (RAHECO) is obtained by producing the random propylene copolymer (R-PP) in at least one reactor, transferring said random propylene copolymer (R-PP) in a subsequent reactor, where in presence of the random propylene copolymer (R-PP) the elastomeric propylene copolymer (E) is produced,
or
(B) a heterophasic propylene copolymer (Pre-RAHECO), the plastomer (P), the polysiloxane (PS), the degrading agent, like a peroxide, and optionally the slip agent (SA) and/or the antiblocking agent (AB) are extruded in an extruder obtaining thereby the polypropylene composition according to one of the preceding claims, wherein said heterophasic propylene copolymer (Pre-RAHECO) a random propylene copolymer (Pre-R-PP) and an elastomeric propylene copolymer (Pre-E) dispersed in said random propylene copolymer (Pre-R-PP), wherein said heterophasic propylene copolymer (Pre-RAHECO) has a total comonomer content of at least 5.0 wt.-%, a comonomer content in the xylene cold soluble (XCS) fraction of at least 20.0 wt.-%, and a melt flow rate $MFR_2$ (230 °C) measured according to ISO 1133 in the range of 0.3 to 10.0 g/10min.

15. Article comprising a polypropylene composition according to one of the preceding claims 1 to 13.

16. Article according to claim 15 being an injection molded article.

**Patentansprüche**

1. Polypropylen-Zusammensetzung, die eine Schmelze-Fließ-Rate $MFR_2$ (230°C), gemessen gemäß ISO 1133, von mindestens 30 g/10 min aufweist, wobei die Zusammensetzung umfasst

(a) ein heterophasisches Propylen-Copolymer (RAHECO), umfassend

(a1) ein statistisches Propylen-Copolymer (R-PP), und
(a2) ein elastomeres Propylen-Copolymer (E),

wobei das heterophasische Propylen-Copolymer (RAHECO) einen Gesamt-Monomer-Gehalt von mindestens 5,0 Gew.-% und einen Comonomer-Gehalt in der in kaltem Xylol löslichen Fraktion (XCS) in dem Bereich von 18,0 bis 35,0 Gew.-% aufweist,
(b) ein Plastomer (P), das von dem elastomeren Propylen-Copolymer (E) verschieden ist, und
(c) ein Polysiloxan (PS).

2. Polypropylen-Zusammensetzung nach Anspruch 1, wobei die Zusammensetzung zusätzlich umfasst

(a) ein Anti-Blockier-Mittel (AB)
und/oder
(b) ein Gleitmittel (SA).

3. Polypropylen-Zusammensetzung nach Anspruch 1 oder 2, wobei die Polypropylen-Zusammensetzung einen Biege-Modul, gemessen an Spritzgieß-Form-Probestücken von 80 x 10 x 4 mm gemäß ISO 178, von nicht unter 550 MPa aufweist.

4. Polypropylen-Zusammensetzung nach Anspruch 1 oder 2, wobei das heterophasische Propylen-Copolymer (RAHECO) aufweist

(a) eine Schmelz-Temperatur Tm, bestimmt durch dynamische Differenz-Kalorimetrie (DSC), in dem Bereich von 130 bis 150°C,
und/oder
(b) einen in kaltem Xylol löslichen Gehalt (XCS), bestimmt gemäß ISO 16152 (25°C), in dem Bereich von 15 bis 50 Gew.-%,
und/oder
(c) einen Comonomer-Gehalt in dem Bereich von 6,0 bis 15,0 Gew.-%,
und/oder
(d) eine Schmelze-Fließ-Rate $MFR_2$ (230°C) in dem Bereich von 7,0 bis 200,0 g/10 min.

5. Polypropylen-Zusammensetzung nach einem der vorangehenden Ansprüche, wobei die in kaltem Xylol lösliche Fraktion (XCS) des heterophasischen Propylen-Copolymers (RAHECO) aufweist

(a) einen Comonomer-Gehalt in dem Bereich von 20,0 bis 35,0 Gew.-%,
und/oder
(b) eine Grenz-Viskosität (IV), bestimmt gemäß DIN ISO 1628/1, (in Decalin bei 135°C) in dem Bereich von 0,8 bis unter 2,0 dl/g.

6. Polypropylen-Zusammensetzung nach einem der vorangehenden Ansprüche, wobei das statistische Propylen-Copolymer (R-PP) einen Comonomer-Gehalt in dem Bereich von 2,0 bis 9,0 Gew.-% aufweist.

7. Polypropylen-Zusammensetzung nach einem der vorangehenden Ansprüche, wobei das statistische Propylen-Copolymer (R-PP) mindestens zwei Propylen-Copolymer-Fraktionen (R-PP1) und (R-PP2) umfasst, wobei die erste Propylen-Copolymer-Fraktion (R-PP1) einen Comonomer-Gehalt in dem Bereich von 1,0 bis 6,0 Gew.-% aufweist, wobei gegebenenfalls weiterhin

(a) die zweite Propylen-Copolymer-Fraktion (R-PP2) einen höheren Comonomer-Gehalt als die erste Propylen-Copolymer-Fraktion (R-PP1) aufweist
und/oder
(b)

$$[\text{R-PP}] - [\text{R-PP1}] \geq 0,5,$$

worin

[R-PP] der Comonomer-Gehalt [Gew.-%] des statistischen Propylen-Copolymers (R-PP), und
[R-PP1] der Comonomer-Gehalt [Gew.-%] der ersten Propylen-Copolymer-Fraktion (R-PP1),

und/oder

(c) die zweite Propylen-Copolymer-Fraktion (R-PP2) einen Comonomer-Gehalt in dem Bereich von 2,5 bis 12,0 Gew.-% aufweist.

8. Polypropylen-Zusammensetzung nach einem der vorangehenden Ansprüche, wobei die Comonomere des statistischen Propylen-Copolymers (R-PP), der ersten Propylen-Copolymer-Fraktion (R-PP1), der zweiten Propylen-Copolymer-Fraktion (R-PP2) und von dem elastomeren Propylen-Copolymer (E) Ethylen und/oder $C_4$ bis $C_{12}$ $\alpha$-Olefin sind.

9. Polypropylen-Zusammensetzung nach einem der vorangehenden Ansprüche, wobei das Plastomer (P) ein lineares Polyethylen niederer Dichte (LLDPE) ist.

10. Polypropylen-Zusammensetzung nach einem der vorangehenden Ansprüche, wobei das Plastomer (P)

(a) Einheiten, abgeleitet von Ethylen und mindestens einem $C_4$ bis $C_{20}$ $\alpha$-Olefin, umfasst und/oder
(b) einen Ethylen-Gehalt von mindestens 50 Gew.-% aufweist.

11. Polypropylen-Zusammensetzung nach einem der vorangehenden Ansprüche, wobei das Plastomer (P) aufweist

(a) eine Dichte, gemessen gemäß ISO 1183-187, in dem Bereich von 820 bis 900 kg/m$^3$ und/oder
(b) eine Schmelze-Fließ-Rate $MFR_2$ (190°C), gemessen gemäß ISO 1133, von mindestens 15,0 g/10 min.

12. Polypropylen-Zusammensetzung nach einem der vorangehenden Ansprüche, wobei das Polysiloxan (PS) ein Polysiloxan mit sehr hohem Molekulargewicht, vorzugsweise ein Polysiloxan mit sehr hohem Molekulargewicht mit einer kinematischen Viskosität von mindestens 10 000 000 cSt, ist.

13. Polypropylen-Zusammensetzung nach einem der vorangehenden Ansprüche, wobei

(a) das Anti-Blockier-Mittel (AB) Siliciumdioxid oder ein Silicat ist und/oder
(b) das Gleitmittel (SA) ein Fettsäureamid ist.

14. Verfahren zur Herstellung der Polypropylen-Zusammensetzung nach einem der vorangehenden Ansprüche, wobei

(A) das heterophasische Propylen-Copolymer (RAHECO), das Plastomer (P), das Polysiloxan (PS) und gegebenenfalls das Gleitmittel (SA) und/oder das Anti-Blockier-Mittel (AB) in einem Extruder extrudiert werden, wobei dabei die Polypropylen-Zusammensetzung nach einem der vorangehenden Ansprüche erhalten wird, wobei vorzugsweise das heterophasische Propylen-Copolymer (RAHECO) durch Herstellen des statistischen Propylen-Copolymers (R-PP) in mindestens einem Reaktor erhalten wird, wobei das statistische Propylen-Copolymer (R-PP) in einen anschließenden Reaktor überführt wird, wo in Gegenwart des statistischen Propylen-Copolymers (R-PP) das elastomere Propylen-Copolymer (E) hergestellt wird, oder
(B) ein heterophasisches Propylen-Copolymer (Pre-RAHECO), das Plastomer (P), das Polysiloxan (PS), das Abbaumittel, wie ein Peroxid, und gegebenenfalls das Gleitmittel (SA) und/oder das Anti-Blockier-Mittel (AB) in einem Extruder extrudiert werden, wobei dabei die Polypropylen-Zusammensetzung nach einem der vorangehenden Ansprüche erhalten wird, wobei das heterophasische Propylen-Copolymer (Pre-RAHECO) ein statistisches Propylen-Copolymer (Pre-R-PP) und ein elastomeres Propylen-Copolymer (Pre-E), dispergiert in dem statistischen Propylen-Copolymer (Pre-R-PP), ist, wobei das heterophasische Propylen-Copolymer (Pre-RAHECO) einen Gesamt-Monomer-Gehalt von mindestens 5,0 Gew.-%, einen Comonomer-Gehalt in der in kaltem Xylol löslichen Fraktion (XCS) von mindestens 20,0 Gew.-%, und eine Schmelze-Fließ-Rate $MFR_2$ (230°C), gemessen gemäß ISO 1133, in dem Bereich von 0,3 bis 10,0 g/10 min aufweist.

15. Gegenstand, umfassend eine Polypropylen-Zusammensetzung nach einem der vorangehenden Ansprüche 1 bis 13.

16. Gegenstand nach Anspruch 15, der ein Spritzgieß-FormGegenstand ist.

**Revendications**

1.  Composition de polypropylène présentant un indice de fluage MFR$_2$ (230°C), mesuré conformément à la norme ISO 1133, d'au moins 30 g/10 min, ladite composition comprenant

    (a) un copolymère de propylène hétérophasique (RAHECO) comprenant

    (a1) un copolymère de propylène statistique (R-PP) et
    (a2) un copolymère de propylène élastomère (E),

    ledit copolymère de propylène hétérophasique (RAHECO) présentant une teneur totale en comonomères d'au moins 5,0 % en poids et une teneur en comonomères de la fraction soluble dans le xylène froid (XCS) située dans la plage allant de 18,0 à 35,0 % en poids,
    (b) un plastomère (P) qui est différent du copolymère de propylène élastomère (E), et
    (c) un polysiloxane (PS).

2.  Composition de polypropylène selon la revendication 1, laquelle composition comprend de plus

    (a) un agent antiblocage (AB)
    et/ou
    (b) un agent de glissement (SA).

3.  Composition de polypropylène selon la revendication 1 ou 2, laquelle composition de polypropylène présente un module en flexion, mesuré sur des éprouvettes moulées par injection de 80 x 10 x 4 mm conformément à la norme ISO 178, non inférieur à 550 MPa.

4.  Composition de polypropylène selon la revendication 1 ou 2, dans laquelle le copolymère de propylène hétérophasique (RAHECO) présente

    (a) un point de fusion Tm, déterminé par calorimétrie à balayage différentiel (DSC) situé dans la plage allant de 130 à 150°C,
    et/ou
    (b) une fraction soluble dans le xylène froid (XCS), déterminée conformément à la norme ISO 16152 (25°C), située dans la plage allant de 15 à 50 % en poids,
    et/ou
    (c) une teneur en comonomères située dans la plage allant de 6,0 à 15,0 % en poids,
    et/ou
    (d) un indice de fluage MFR$_2$ (230°C) situé dans la plage allant de 7,0 à 200,0 g/10 min.

5.  Composition de polypropylène selon l'une des revendications précédentes, dans laquelle la fraction soluble dans le xylène froid (XCS) du copolymère de propylène hétérophasique (RAHECO) présente

    (a) une teneur en comonomères située dans la plage allant de 20,0 à 35,0 % en poids,
    et/ou
    (b) une viscosité intrinsèque (IV), déterminée conformément à la norme DIN ISO 1628/1 (dans la décaline à 135°C), située dans la plage allant de 0,8 à moins de 2,0 dl/g.

6.  Composition de polypropylène selon l'une des revendications précédentes, dans laquelle le copolymère de propylène statistique (R-PP) présente une teneur en comonomères située dans la plage allant de 2,0 à 9,0 % en poids.

7.  Composition de polypropylène selon l'une des revendications précédentes, dans laquelle le copolymère de propylène statistique (R-PP) comprend au moins deux fractions de copolymère de propylène (R-PP1) et (R-PP2), la première fraction de copolymère de propylène (R-PP1) présentant une teneur en comonomères située dans la plage allant de 1,0 à 6,0 % en poids, et dans laquelle éventuellement en outre

    (a) la deuxième fraction de copolymère de propylène (R-PP2) présente une teneur en comonomères supérieure à celle de la première fraction de copolymère de propylène (R-PP1),
    et/ou

(b)

$$[R\text{-}PP] - [R\text{-}PP1] \geq 0,5$$

où

[R-PP] est la teneur en comonomères [% en poids] du copolymère de propylène statistique (R-PP) et [R-PP1] est la teneur en comonomères [% en poids] de la première fraction de copolymère de propylène (R-PP1), et/ou

(c) la deuxième fraction de copolymère de propylène (R-PP2) présente une teneur en comonomères située dans la plage allant de 2,5 à 12,0 % en poids.

8. Composition de polypropylène selon l'une des revendications précédentes, dans laquelle les comonomères du copolymère de propylène statistique (R-PP), de la première fraction de copolymère de propylène (R-PP1), de la deuxième fraction de copolymère de propylène (R-PP2) et du copolymère de propylène élastomère (E) sont l'éthylène et/ou une $\alpha$-oléfine en $C_4$ à $C_{12}$ .

9. Composition de polypropylène selon l'une des revendications précédentes, dans laquelle le plastomère (P) est un polyéthylène basse densité linéaire (LLDPE).

10. Composition de polypropylène selon l'une des revendications précédentes, dans laquelle le plastomère (P)

(a) comprend des motifs dérivés d'éthylène et d'au moins une $\alpha$-oléfine en $C_4$ à $C_{20}$, et/ou
(b) présente une teneur en éthylène d'au moins 50 % en poids.

11. Composition de polypropylène selon l'une des revendications précédentes, dans laquelle le plastomère (P) présente

(a) une masse volumique, déterminée conformément à la norme ISO 1183-187, située dans la plage allant de 820 à 900 kg/m$^3$, et/ou
(b) un indice de fluage MFR$_2$ (190°C), mesuré conformément à la norme ISO 1133, d'au moins 15,0 g/10 min.

12. Composition de polypropylène selon l'une des revendications précédentes, dans laquelle le polysiloxane (PS) est un polysiloxane de masse moléculaire ultra élevée, de préférence un polysiloxane de masse moléculaire ultra élevée présentant une viscosité cinétique d'au moins 10 000 000 cSt.

13. Composition de polypropylène selon l'une des revendications précédentes, dans laquelle

(a) l'agent antiblocage (AB) est le dioxyde de silicium ou un silicate, et/ou
(b) l'agent de glissement (SA) est un amide d'acide gras.

14. Procédé pour la préparation de la composition de polypropylène selon l'une des revendications précédentes, dans lequel

(A) le copolymère de propylène hétérophasique (RAHECO), le plastomère (P), le polysiloxane (PS), et éventuellement l'agent de glissement (SA) et/ou l'agent antiblocage (AB) sont extrudés dans une extrudeuse, ce qui donne ainsi la composition de polypropylène selon l'une des revendications précédentes, le copolymère de propylène hétérophasique (RAHECO) étant de préférence obtenu par production du copolymère de propylène statistique (R-PP) dans au moins un réacteur, transfert dudit copolymère de propylène statistique (R-PP) dans un réacteur subséquent où, en présence du copolymère de propylène statistique (R-PP), le copolymère de propylène élastomère (E) est produit,
ou
(B) un copolymère de propylène hétérophasique (Pre-RAHECO), le plastomère (P), le polysiloxane (PS), l'agent de dégradation, tel qu'un peroxyde, et éventuellement l'agent de glissement (SA) et/ou l'agent antiblocage (AB) sont extrudés dans une extrudeuse, ce qui donne ainsi la composition de polypropylène selon l'une des revendications précédentes, ledit copolymère de propylène hétérophasique (Pre-RAHECO) comprenant un copolymère de propylène statistique (Pre-R-PP) et un copolymère de propylène élastomère (Pre-E) dispersé dans ledit copolymère de propylène statistique (Pre-R-PP), ledit copolymère de propylène hétérophasique (Pre-RAHECO) présentant une teneur totale en comonomères d'au moins 5,0 % en poids, une teneur en comonomères de la fraction soluble dans le xylène froid (XCS) d'au moins 20,0 % en poids, et un indice de fluage $MFR_2$ (230°C), mesuré conformément à la norme ISO 1133, situé dans la plage allant de 0,3 à 10,0 g/10 min.

15. Article comprenant une composition de polypropylène selon l'une des revendications 1 à 13.

16. Article selon la revendication 15, qui est un article moulé par injection.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0887379 A
- WO 9212182 A
- WO 2004000899 A
- WO 2004111095 A
- WO 9924478 A
- WO 9924479 A
- WO 0068315 A
- WO 03000754 A
- WO 2004029112 A

**Non-patent literature cited in the description**

- **SACCI, M. C. ; FORLINI, F. ; TRITTO, I ; LOCATELLI, P.** *Macromolecules,* 1996, vol. 29, 3341-3345
- **SACCI, M. C. ; TRITTO, I. ; SHAN, C. ; MENDICHI, R.** *Macromolecules,* 1991, vol. 24, 6823-6826
- **THOMAS KOCH ; DORIS MACHL.** Evaluation of scratch resistance in multiphase PP blends. *POLYMER TESTING,* 2007, vol. 26, 927-936